# EUROPEAN PATENT APPLICATION

(11) **EP 3 506 228 A1**
(43) Date of publication of application: **03.07.2019**
(21) Application number: 18213574.9
(22) Date of filing: 18.12.2018
(51) Int. Cl.: G08B 13/196, H04N 7/18

(54) **IMAGE CAPTURING APPARATUS, IMAGE PROCESSING APPARATUS, CONTROL METHOD, AND PROGRAM**

(30) Priority: 27.12.2017 JP 2017251719
(71) Applicant: CANON KABUSHIKI KAISHA, Ohta-ku Tokyo 146-8501 (JP)
(72) Inventor: YONISHI, Osamu, Ohta-ku, Tokyo (JP)
(74) Representative: Williamson, Brian

(57) **Abstract**

In a case where it is difficult for a user to determine which of an infra-red light video, a visible light video, and a combined video is desirable for use in monitoring for the reason that the determination result changes depending on the image capturing situation, an image capturing apparatus outputs at least one of the infra-red light image, the visible light image, and the combined image based on a result of detection of an object in the infra-red light image and a result of detection of an object in the visible light image.

## Description

### BACKGROUND

### Field

The present invention relates to a video distribution technique by an image capturing apparatus that includes two or more image capturing units.

### Description of the Related Art

In recent years, among network cameras used for monitoring purposes, models capable of capturing images at night and/or under adverse conditions, such as rain and snow, using infra-red light have been on the increase. Many network cameras are used for security purposes, and among these network cameras, a model including both an infra-red light camera and a visible light camera exists.

An infra-red light camera causes a dedicated sensor to sense infra-red light emitted from an object and performs image processing on the sensed data of the infra-red light, thereby generating a video that can be visually confirmed. The infra-red light camera has the following advantages. The infra-red light camera does not require a light source and is less likely to be influenced by rain or fog. Furthermore, the infra-red light camera is suitable for long-distance monitoring. On the other hand, the infra-red light camera also has the disadvantage that the infra-red light camera has lower resolution than a general visible light camera, and therefore is not suitable for capturing a color and a design such as a character.

Recently, a technique for generating a video by clipping the shape of an object sensed by an infra-red light camera and combining the clipped shape with a visible light video has been used.

However, in a case where there are a plurality of types of video data to be transmitted by a twin-lens network camera as described above, the transmission band may be strained by transmitting both an infra-red video and a visible video. Thus, Japanese Patent No. 6168024 discusses a method for combining an infra-red video with a portion of a visible video where contrast is low, and distributing the combined video.

It may be, however, difficult for a user to determine which of an infra-red light video, a visible light video, and a combined video is more desirable for use in monitoring, because the user needs to make the determination depending on the image capturing situation that varies. The method discussed in Japanese Patent No. 6168024 cannot assist a user in determining a video desirable for use in monitoring.

### SUMMARY

According to a first aspect of the present invention, there is provided image capturing apparatuses as specified in claims 1 to 8. According to a second aspect of the present invention, there is provided image processing apparatuses as specified in claims 9 and 10. According to a third aspect of the present invention, there is provided control methods as specified in claims 11 to 16. According to a fourth aspect of the present invention, there is provided computer programs as specified in claims 17 and 18.

Further features of the present invention will become apparent from the following description of exemplary embodiments with reference to the attached drawings. Each of the embodiments of the present invention described below can be implemented solely or as a combination of a plurality of the embodiments. Also, features from differe nt embodiments can be combined where necessary or where the combination of elements or features from individual embodiments in a single embodiment is beneficial.

### BRIEF DESCRIPTION OF THE DRAWINGS

Fig. 1 is a schematic diagram illustrating an external appearance of a network camera.
Fig. 2A is a schematic diagram illustrating a general configuration of a network camera system Fig. 2B is a schematic diagram illustrating a hardware configuration of the network camera system
Fig. 3 is a block diagram illustrating a general configuration of the network camera.
Fig. 4 is a flowchart illustrating a distribution video determination process.
Fig. 5 is a schematic diagram illustrating a general configuration of the network camera cooperating with a learning mechanism.
Fig. 6 is a schematic diagram illustrating an example of a determination result by machine learning.
Fig. 7 is a schematic diagram illustrating a rule for determining a detection level.
Fig. 8 is a flowchart illustrating a distribution video determination process.
Fig. 9 is a flowchart illustrating a distribution video determination process.
Fig. 10 is a schematic diagram illustrating an example of a result of an object detection in an infra-red light video.

### DESCRIPTION OF THE EMBODIMENTS

With reference to the drawings, a first exemplary embodiment is described below.

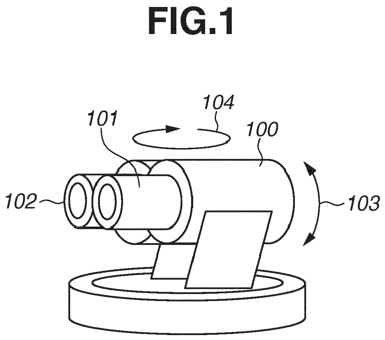

In Fig. 1, a network camera 100 includes a lens barrel unit 101, which includes a lens (not illustrated) for capturing visible light and an image sensor (not illustrated) such as a complementary metal-oxide-semiconductor (CMOS) sensor, and a lens barrel unit 102, which includes a lens for capturing infra-red light and an image sensor. The network camera 100 includes a driving unit (not illustrated) for moving the image capturing area in a horizontal direction (a pan direction 104 in Fig. 1) and a vertical direction (a tilt direction 103 in Fig. 1). The lenses and the lens barrels may be attachable and detachable.

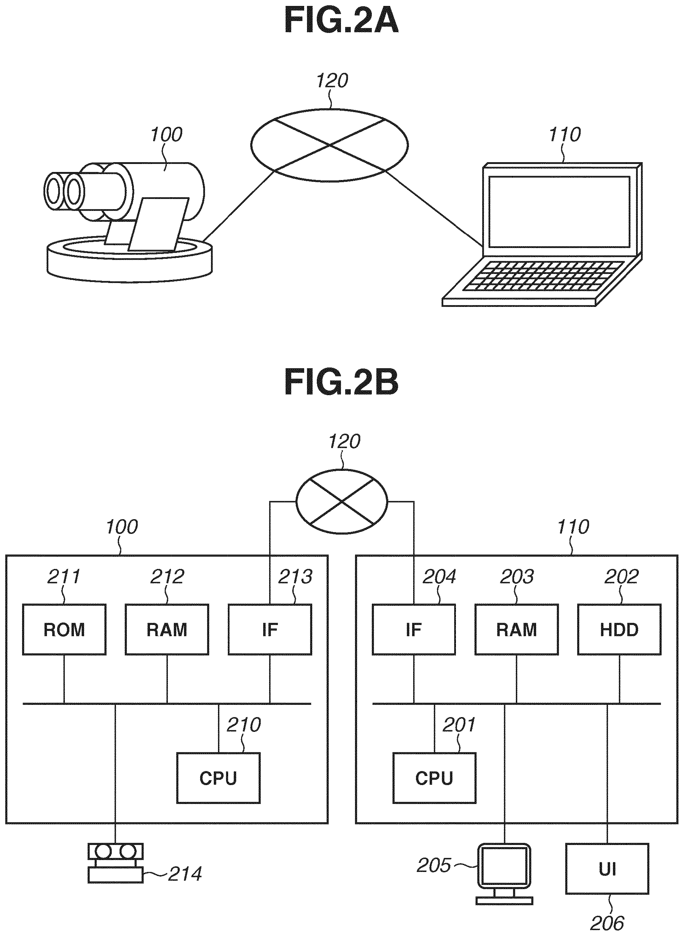

Fig. 2A is a schematic diagram of a network camera system including the network camera 100. The network camera 100 and a client apparatus 110 are connected together such that the network camera 100 and the client apparatus 110 can communicate with each other via a network 120. The client apparatus 110 transmits various commands to the network camera 100 via the network 120. The network camera 100 transmits responses to the commands to the client apparatus 110. Examples of the commands include a pan-tilt-zoom control (PTZ control) command for changing the image capturing angle of view of the network camera 100, and a parameter setting command for adjusting at least one of an image capturing mode, a distribution mode, and an image processing/detection function of the network camera 100. A PTZ control command, a parameter setting command, and a capability acquisition command for acquiring a function that can be used by the network camera 100 may be communicated according to a protocol compliant with the Open Network Video Interface Forum (ONVIF) standard.

Fig. 2B is a schematic diagram illustrating respective hardware configurations of the client apparatus 110 and the network camera 100. A central processing unit (CPU) 201 is a central processing unit for controlling the client apparatus 110. A hard disk drive (HDD) 202 is a large-capacity storage device (a secondary storage device) for storing a program and a parameter for the CPU 201 to control the client apparatus 110. The program and the parameter do not necessarily need to be stored in an HDD. Alternatively, various storage media such as a solid-state drive (SSD) and a flash memory may be used. A random-access memory (RAM) 203 is a memory into which the CPU 201 loads a program read from the HDD 202 and in which the CPU 201 executes processing described below. Further, the RAM 203 as a primary storage device is occasionally used as a storage area for temporarily storing data and a parameter on which various processes are to be performed.

An interface (IF) 204 communicates with the network camera 100 via the network 120 according to a protocol such as the Transmission Control Protocol/Internet Protocol (TCP/IP), the Hypertext Transfer Protocol (HTTP), or the ONVIF protocol. The IF 204 receives video data, metadata of detected object information, and the above responses from the network camera 100 and transmits the above various commands to the network camera 100.

A display apparatus 205 is a display device such as a display for displaying a video according to video data. The housing of the client apparatus 110 may be integrated with the display apparatus 205. A user interface (UI) 206 is an input apparatus such as a keyboard and a mouse, or may be a joystick or a voice input apparatus.

As the client apparatus 110, a general personal computer (PC) can be used. By the CPU 201 reading a program code stored in the HDD 202 and executing the read program, the client apparatus 110 can provide a graphical user interface (GUI) for setting the function of detecting an object. The present exemplary embodiment is described on the assumption that the CPU 201 performs processing. Alternatively, at least a part of the processing of the CPU 201 may be performed by dedicated hardware. For example, the process of displaying a GUI and video data on the display apparatus 205 may be performed by a graphics processing unit (GPU). The process of reading a program code from the HDD 202 and loading the read program code into the RAM 203 may be performed by direct memory access (DMA) that functions as a transfer device.

Next, the hardware configuration of the network camera 100 is described. A CPU 210 is a central processing unit for performing overall control of the network camera 100. A read-only memory (ROM) 211 stores a program for the CPU 210 to control the network camera 100. The network camera 100 may include a secondary storage device equivalent to the HDD 202 in addition to the ROM 211. A RAM 212 is a memory into which the CPU 210 loads the program read from the ROM 211 and in which the CPU 210 executes processing. Further, the RAM 212 as a primary storage memory is also used as a storage area for temporarily storing, in the network camera 100, data on which various processes are to be performed.

An IF 213 communicates with the client apparatus 110 via the network 120 according to a protocol such as the TCP/IP, the HTTP, or the ONVIF protocol The IF 213 transmits video data, metadata of a detected object, or the above responses to the client apparatus 110 or receives the above various commands from the client apparatus 110.

An image capturing device 214 is an image capturing device such as a video camera for capturing a live video as a moving image or a still image. The housing of the network camera 100 may be integrated with or separate from the housing of the image capturing device 214.

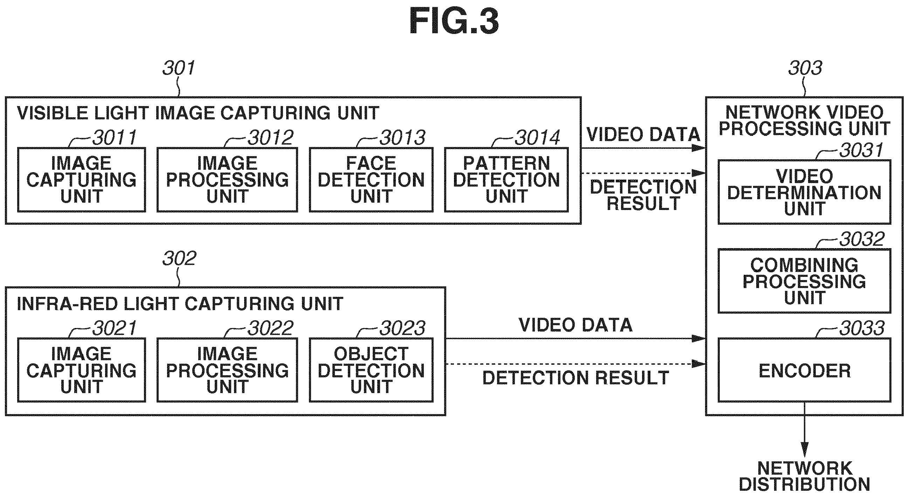

Next, with reference to Fig. 3, the functional components of the network camera 100 are described.

A visible light image capturing unit 301 includes an image capturing unit 3011, which includes a lens and an image sensor, an image processing unit 3012, a face detection unit 3013, and a pattern detection unit 3014. The visible light image capturing unit 301 captures an image of a subject and performs various types of image processing and detection processes.

The image processing unit 3012 performs image processing necessary to perform a detection process at a subsequent stage, on an image signal captured by the image capturing unit 3011, thereby generating image data (also referred to as a "visible light image" or a "visible light video"). For example, in a case where matching is performed based on a shape characteristic in the detection process at the subsequent stage, the image processing unit 3012 performs a binarization process or performs the process of extracting an edge in the subject. Further, in a case where detection is performed based on a color characteristic in the detection process at the subsequent stage, the image processing unit 3012 performs color correction based on the color temperature of a light source or the tint of a lens estimated in advance or performs a dodging process for backlight correction or blurring correction. Further, in a case where the image processing unit 3012 performs a histogram process based on the luminance component of the captured image signal, and the captured image includes portions overexposed or underexposed, the image processing unit 3012 may perform high-dynamic-range (HDR) imaging in conjunction with the image capturing unit 3011. As the HDR imaging, a general technique for combining a plurality of images captured by changing the exposure of the image capturing unit 3011 can be used.

The face detection unit 3013 analyzes the image data sent from the image processing unit 3012 and determines whether a portion that can be recognized as a person's face is present in an object in the video. "Face detection" refers to the process of extracting any portion from an image and checking (matching) the extracted portion image with a pattern image representing a characteristic portion forming the person's face, thereby determining whether a face is present in the image. Examples of the characteristic portion include the relative positions between the eyes and the nose, and the shapes of the cheekbones and the chin. Further, a pattern characteristic (e.g., the relative positions between the eyes and the nose, and the shapes of the cheekbones and the chin) may be held instead of the pattern image and compared with a characteristic extracted from the portion image, thereby matching the portion image with the pattern characteristic.

The pattern detection unit 3014 analyzes the image data sent from the image processing unit 3012 and determines whether a portion where a pattern such as a color or character information can be recognized is present in an object in the video. 'Pattern detection" refers to the process of extracting any portion in an image and comparing the extracted portion with a reference image (or a reference characteristic) such as a particular character or mark, thereby determining whether the extracted portion matches the reference image. To take maritime surveillance and border surveillance as examples, examples of the reference image include characters written on the body of a detected object and the color or the design of the displayed national flag.

An infra-red light capturing unit 302 includes an image capturing unit 3021, which includes a lens and an image sensor, an image processing unit 3022, and an object detection unit 3023. The infra-red light capturing unit 302 captures an image of a subject and performs necessary image processing and a detection process.

The image processing unit 3022 performs signal processing for converting a signal captured by the image capturing unit 3021 into an image that can be visually recognized, thereby generating image data (an infra-red light image or an infra-red light video).

The object detection unit 3023 analyzes the image data sent from the image processing unit 3022 and determines whether an object different from the background is present in the video. For example, the object detection unit 3023 references as a background image an image captured in the situation where no object appears. Then, based on the difference between the background image and the captured image on which the detection process is to be performed, the object detection unit 3023 extracts as the foreground a portion where the difference is greater than a predetermined threshold and the difference region is equal to or greater than a predetermined size. Further, in a case where the circumscribed rectangle of the difference region has an aspect ratio corresponding to a person, a vehicle, or a vessel, the object detection unit 3023 may sense the type of the object. Further, the object detection unit 3023 may execute frame subtraction together with background subtraction to enable distinction between a moving object and a still object. If a region sensed by the background subtraction includes a predetermined proportion or more of a difference region obtained by the frame subtraction, the region is distinguished as a moving object. If not, the region is distinguished as a still object.

A network video processing unit 303 includes a video determination unit 3031, which determines video data to be distributed, a combining processing unit 3032, which performs the process of combining the infra-red light video with the visible light video, and an encoder 3033, which performs a video compression process for distribution of the video data to the network 120.

The combining processing unit 3032 generates combined image data (a combined image or a combined video) using the video determination unit 3031. For example, if it is determined that the visible light video has poor visibility, the combining processing unit 3032 performs a combining process in which the details (the shape and the texture) about the object detected in the infra-red light video are clipped and the clipped details are superimposed on a corresponding position in the visible light video. The details of the determination process performed by the video determination unit 3031 will be described below. Examples of techniques used for the combining process by the combining processing unit 3032 include a technique for combining the visible light video with the infra-red light video by superimposing, on a portion of the visible light video where contrast is low, an image at the same position in the infra-red video, and a technique for combining the visible light video with the infra-red light video by superimposing the foreground of the infra-red video on the background image of the visible light video. Alpha blending may also be used so long as the visible light video and the infra-red video can be combined together such that the background of the visible light video and the foreground of the infra-red video are emphasized.

The encoder 3033 performs the process of compressing the video data determined by the video determination unit 3031 and transmits the video data to the network 120 via the IF 213. As the method for compressing the video data, an existing compression method such as Joint Photographic Experts Group (JPEG), Moving Picture Experts Group phase 4 (MPEG-4), H.264, or High Efficiency Video Coding (HEVC) may be used.

Each of the visible light image capturing unit 301 and the infra-red light capturing unit 302 in Fig. 3 may include an image processing unit and a detection unit as dedicated hardware. Alternatively, these components may be achieved by the CPU 210 executing a program code in the RAM 212. In the network video processing unit 303, the video determination unit 3031, the combining processing unit 3032, and the encoder 3033 can also be achieved by the CPU 210 executing a program code in the RAM 212. However, with the configurations of the detection processes and the compression process included as dedicated hardware, it is possible to disperse the load of the CPU 210.

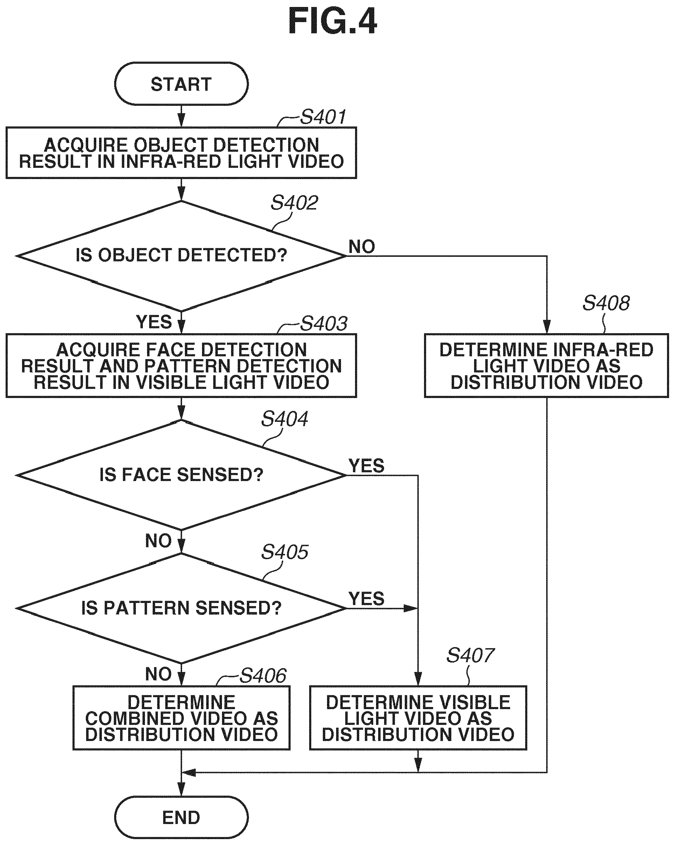

Next, with reference to Fig. 4, a description is given of the process performed by the video determination unit 3031 for determining the distribution video. First, in step S401, the video determination unit 3031 acquires a result of an object detection in the infra-red light video, from the object detection unit 3023. Next, in step S402, the video determination unit 3031 analyzes the acquired object detection result and determines whether the object detection unit 3023 detects an object in the infra-red light video.

If an object is not detected in step S402 (No in step S402), then in step S408, the video determination unit 3031 determines the infra-red light video as the distribution video. This is because it is desirable to use the infra-red light video for monitoring in priority to other videos for the following reasons. As the properties of the infra-red light video, the sensing accuracy of the infra-red light video in the visible light video obtained at night or in bad weather is less likely to decrease even under adverse conditions. Further, an object at a long distance can be sensed in the infra-red light video, compared to the visible light video.

If, on the other hand, an object is detected in step S402 (Yes in step S402), then in step S403, the video determination unit 3031 acquires a face detection result from the face detection unit 3013 and acquires a pattern detection result from the pattern detection unit 3014. Then, based on the acquired detection results, in step S404, the video determination unit 3031 determines whether a face is sensed. Further, in step S405, the video determination unit 3031 determines whether a pattern is sensed.

If a face is detected in step S404 (Yes in step S404), or if a pattern is detected in step S405 (Yes in step S405), the processing proceeds to step S407. In step S407, the video determination unit 3031 determines the visible light video as the distribution video. This is because a video in which a face can be detected is distributed to the client apparatus 110, and thereby can be used in a face authentication process by the client apparatus 110, or a video in which a pattern can be detected is distributed to the client apparatus 110, whereby the object can be identified using a more vast dictionary by the client apparatus 110.

If, on the other hand, a face is not detected in step S404 (No in step S404), and if a pattern is not detected in step S405 (No in step S405), then in step S406, the video determination unit 3031 determines the combined video as the distribution video. This is because a background portion that can be visually recognized in the visible light video and the position of the object can be confirmed together. When a user references the distribution video displayed on the display apparatus 205 to actually visually confirm the object, the combined video obtained by combining the visible light video and the infra-red video such that the background of the visible light video and the foreground of the infra-red video are emphasized is advantageous for monitoring purposes.

As described above, according to the present exemplary embodiment, a video type suitable for monitoring is determined based on the result of the detection of an object and transmitted to the client apparatus 110, so that the user does not need to determine and switch to the video type desirable for monitoring, which leads to improvement of convenience. Further, control can be performed so that video data undesirable for monitoring is not distributed. Thus, it is possible to perform efficient monitoring.

Further, there is a case where a network camera can transmit only a single video among a plurality of types in the first place, depending on the installation location. This case corresponds to, for example, a network camera installed deep in the mountains or near a coastal line where there is no building or street light around the network camera. In such a location, an infrastructure for transmitting a video is not put in place, so that a sufficient transmission band cannot often be secured. However, in a case where only one of the infra-red light video and the visible light video can be transmitted and the infra-red light video is always distributed, a face authentication function or an object specifying function cannot be achieved in good image capturing conditions. Further, if the visible light video is always distributed, an object cannot be detected in adverse image capturing conditions. According to the above exemplary embodiment, a video suitable for monitoring that is less likely to be influenced by weather conditions can be distributed even in an installation location where a large amount of data cannot be transferred.

Further, there is a case where, even if it is detected that an object is present in the infra-red light video, it is difficult to determine whether the infra-red light video should be switched to the visible light video. Further, generally, since the visible light video often has higher resolution and lower compression efficiency than the infra-red light video, the amount of data of the visible light video to be transmitted via a network tends to be large. If any effects of the monitoring cannot be expected, thus, it may be desirable that the infra-red light video should not be switched to the visible light video in terms of the amount of data transfer.

In such a case, machine learning may be applied to an object determination process, and the type of an object may be determined based on a characteristic such as the shape or the size. Then, only if an object at a certain detection level or higher is identified, the infra-red light video may be switched to the visible light video. The "detection level" indicates the degree at which an object should be monitored.

Further, "machine learning" refers to an algorithm for performing recursive learning from particular sample data, finding a characteristic hidden in the particular sample data, and applying the learning result to new data, thereby enabling the prediction of the future according to the found characteristic. An existing algorithm such as TensorFlow, TensorFlow Lite, or Caffe2 may be used. In the following description, components or steps having functions similar to those in Figs. 1 to 4 are designated by the same signs, and components structurally or functionally similar to those in Figs. 1 to 4 are not described here.

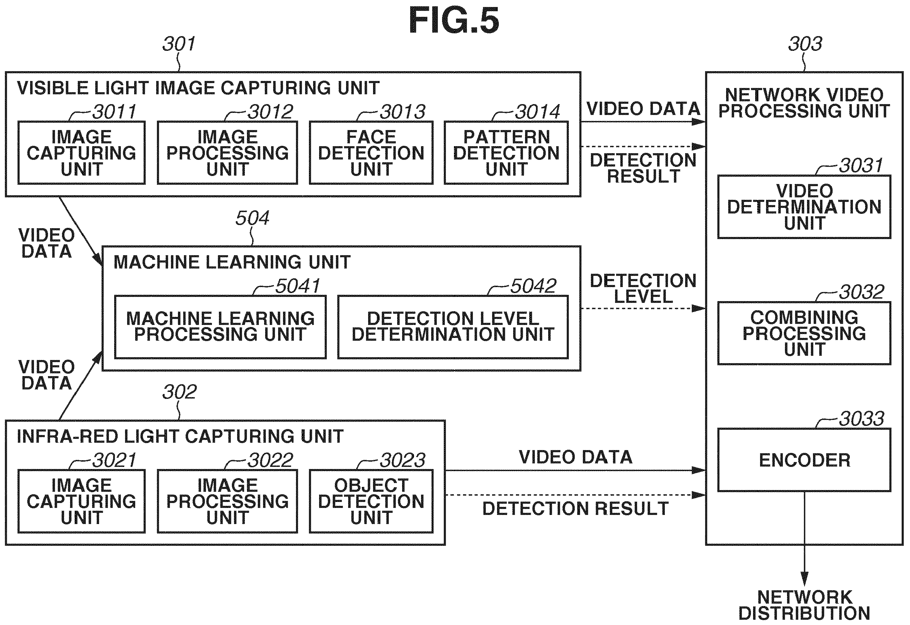

With reference to Fig. 5, the components and the functions of the network camera 100 according to the present exemplary embodiment are described. A machine learning unit 504 (estimation means) includes a machine learning processing unit 5041, which generates an object determination result based on learning data, and a detection level determination unit 5042, which determines the detection level based on the object determination result.

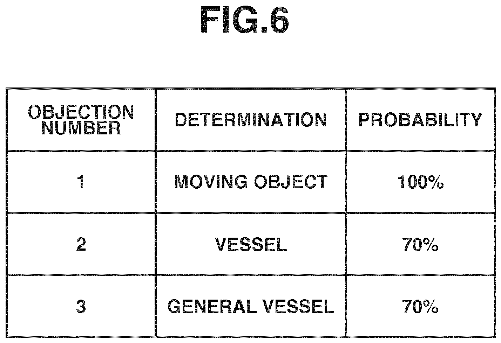

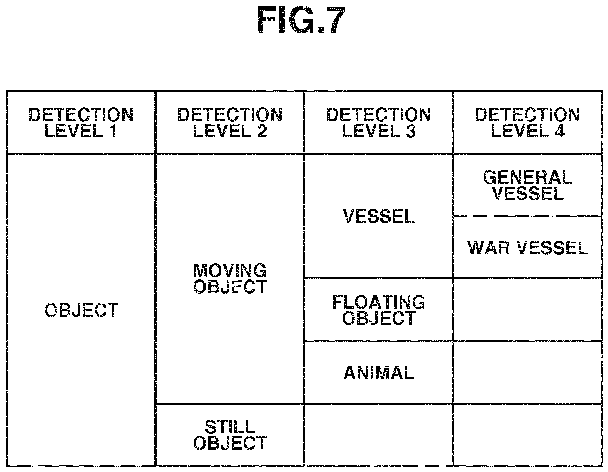

With reference to Figs. 6 and 7, a detection level determination process using machine learning is described. Both the infra-red light video and the visible light video are used for determination based on machine learning for the reason that the infra-red light video is used for determination at night or in a poor visibility environment, and the visible light video is used for determination in a good visibility environment. Further, an object to be detected differs depending on the intended use of the monitoring or the installation location. The present exemplary embodiment is described using maritime surveillance as an example.

The machine learning processing unit 5041 prepares in advance data obtained by learning the characteristics of objects and vessels to be sensed at sea and performs a machine learning process on a video input from the visible light image capturing unit 301 or the infra-red light capturing unit 302. Fig. 6 illustrates an example of the processing result obtained by determining the type of an object based on machine learning. Since there is a case where a plurality of objects appear in the input video, an object number (or an object identification (ID)) is assigned to each of the recognized types of objects. Then, the machine learning processing unit 5041 calculates the probability (the certainty or the likelihood) that the determination result with respect to each object number matches the determination result.

Based on the result of the determination by the machine learning processing unit 5041, the detection level determination unit 5042 determines the detection level. Fig. 7 illustrates a table indicating a rule for determining the detection level based on the determination result of the types of objects. The determination results in Fig. 6 include an object determined as a general vessel by the machine learning processing unit 5041. Thus, the detection level determination unit 5042 determines the detection level as 4.

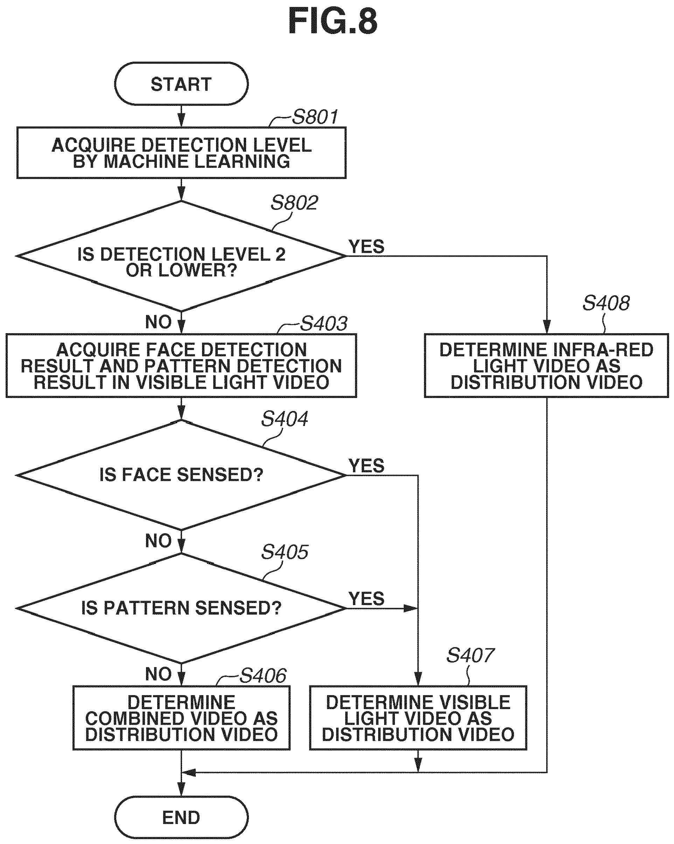

Next, with reference to Fig. 8, a description is given of a distribution video determination process by the video determination unit 3031.

First, in step S801, the video determination unit 3031 acquires the detection level from the machine learning unit 504.

If the detection level is 2 or lower (Yes in step S802), then in step S408, the video determination unit 3031 determines the infra-red light video as the distribution video. This is because, if the detection level is 2 or lower, the object is not identified as a vessel, and therefore, it is not necessary to distribute the visible light video, which has a large amount of data. Next, if the detection level is 3 or higher (No in step S802), then in step S403, the video determination unit 3031 acquires a detection result from the face detection unit 3013 and also acquires a pattern detection result from the pattern detection unit 3014.

As the detection results, if a face is detected (Yes in step S404), or if a pattern is detected (Yes in step S405), then in step S407, the video determination unit 3031 determines the visible light video as the distribution video. If a face is not detected (No in step S404), and if a pattern is not detected (No in step S405), then in step S406, the video determination unit 3031 determines the combined video as the distribution video.

As described above, according to the configuration in Fig. 5, the detection level determined using machine learning is used to determine the distribution video, whereby it is possible to perform more efficient monitoring operation in the client apparatus 110.

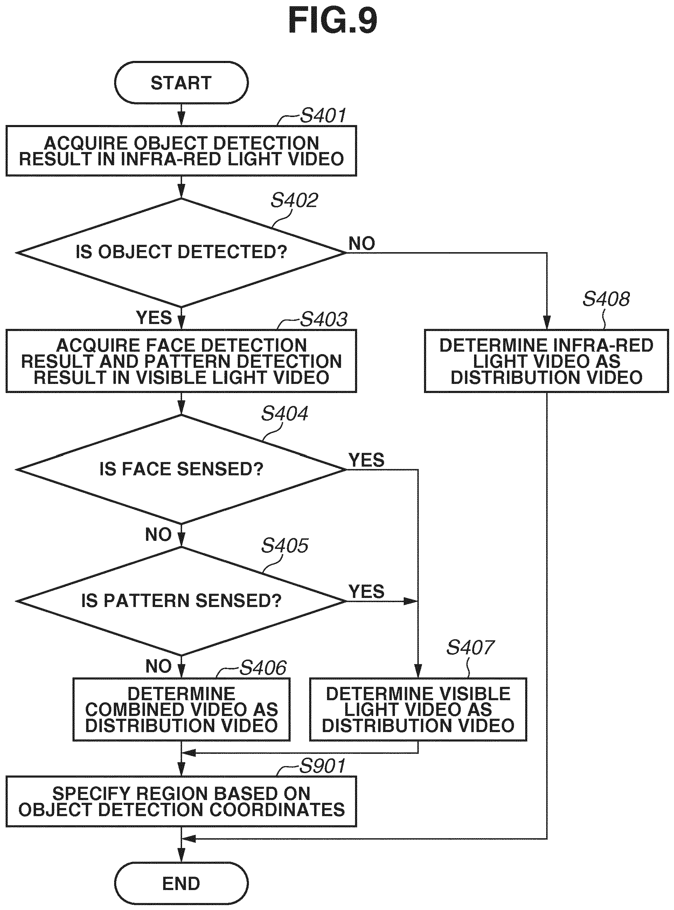

Further, as illustrated in Fig. 9, after the distribution video is determined by the network video processing unit 303, a bit rate reduction process may be performed. In step S901, after determining the distribution video from among the visible light video, the infra-red video, and the combined video, the video determination unit 3031 sets a region of interest (ROI) based on object information (a sensed position and a sensed size) included in the detection result acquired from the infra-red light video. Then, the encoder 3033 performs a bit rate reduction process on a region other than the ROI. The bit rate reduction process can be achieved by the encoder 3033 making the compression ratio or the quantization parameter of the region other than the ROI greater than that of the ROI, or making the rate of cutting a high-frequency component in compression involving discrete cosine transform (DCT) greater in the region other than the ROI than in the ROI.

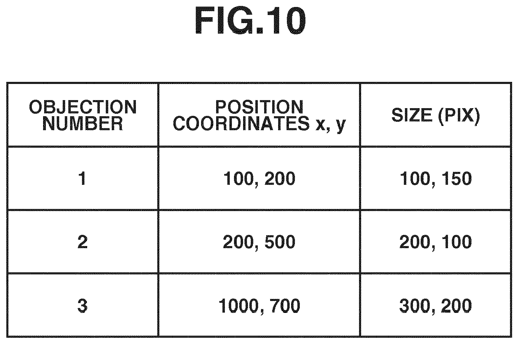

Fig. 10 is an example of the object information that can be acquired from the object detection unit 3023. The object detection unit 3023 assigns an object number to each of sensed objects and generates position coordinates in the video (with the origin at the upper left of the image, the number of pixels in the horizontal direction is X, and the number of pixels in the vertical direction is Y) and an object size (the number of pixels in the X-direction and the number of pixels in the Y-direction) with respect to each object number.

Based on the position coordinates and the object size of an acquired object number, the encoder 3033 sets a rectangular region and performs the process of reducing the bit rate of a portion outside the rectangular region. Further, using the video determination unit 3031, the encoder 3033 may perform a high compression process on a video of a type other than a distribution target and distribute the video of the type other than the distribution target at a low bit rate together with a video of a type as the distribution target. The above description has been given using the face detection unit 3013 as an example. Alternatively, the function of detecting a human body (the upper body, the whole body, or a part of the body) may be used.

In the above description, an example has been described where the distribution video is determined within the network camera 100. Alternatively, the network camera 100 may transmit the infra-red light capturing video and the visible light capturing video to the client apparatus 110 connected to the network camera 100, and the client apparatus 110 may select a video to be output.

In this case, the CPU 201 of the client apparatus 110 may execute a predetermined program, thereby functioning as the video determination unit 3031 and the combining processing unit 3032.

Further, the face detection unit 3013, the pattern detection unit 3014, and the object detection unit 3023 may also be achieved by the CPU 201 of the client apparatus 110. Further, a configuration may be employed in which the machine learning unit 504 may be achieved by the CPU 201 of the client apparatus 110.

Further, the client apparatus 110 may display only a video of the type selected by the video determination unit 3031 on the display apparatus 205, or may emphasize the video of the type selected by the video determination unit 3031 or cause the video to pop up when a plurality of types of videos are displayed. In the specification, "detection" and "sensing" have the same meaning and mean finding something by examination.

Further, the present invention can be achieved also by performing the following process. This is the process of supplying software (a program) for achieving the functio ns of the above exemplary embodiment to a system or an apparatus via a network or various recording media, and of causing a computer (or a CPU or a microprocessor unit (MPU)) of the system or the apparatus to read the program and execute the read program.

Based on the image capturing state of a video captured by the camera, it is possible to facilitate the determination of a video suitable for monitoring use, from among an infra-red light video, a visible light video, and a combined video.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An image capturing apparatus (100) including infra-red light capturing means (302) and visible light capturing means (301), the image capturing apparatus (100) comprising:
detection means (3013, 3014, 3023) configured to detect an object from at least one of a first image obtained by the infra-red light capturing means (302) and a second image obtained by the visible light capturing means (301);
combining means (3032) configured to generate a combined image based on the first and second images; and
output means (3033) configured to selectively output, based on a result of the detection by the detection means, one of the first image, the second image, and the combined image to a client apparatus (110) via a network (120),
wherein the detection means includes first detection means (3023) for detecting an object from the first image obtained by the infra-red light capturing means (302), and second detection means (3013, 3014) for detecting an object from the second image obtained by the visible light capturing means (301).

2. The image capturing apparatus according to claim 1, wherein in a case where the first detection means (3023) does not detect an object from the first image, the output means (3033) is configured to output the first image to the client apparatus (110).

3. The image capturing apparatus according to claim 1, wherein in a case where the second detection means (3013, 3014) detects a predetermined characteristic from the second image, the output means (3033) is configured to output the second image to the client apparatus (110).

4. The image capturing apparatus according to claim 1, wherein in a case where the second detection means (3013, 3014) does not detect a predetermined characteristic from the second image, the output means is configured to output the combined image to the client apparatus (110).

5. The image capturing apparatus according to claim 1, further comprising estimation means (504) for estimating a detected object from the first and second images using machine learning,
wherein based on a detection level of the object estimated by the estimation means (504) and the result of the detection by the second detection means (3013, 3014), the output means is configured to output at least one of the first image, the second image, and the combined image.

6. The image capturing apparatus according to claim 1, further comprising setting means (303) configured to set, based on an object detected from the first image obtained by the infra-red light capturing means (302), a region of interest in the second image obtained by the visible light capturing means (301),
wherein the output means (3033) is configured to reduce a bit rate of a portion outside the region of interest in at least one of the second image and the combined image and to output the at least one of the second image and the combined image.

7. The image capturing apparatus according to claim 1, wherein the combining means (3032) is configured to clip an object detected from the first image and superimposes the clipped object at a corresponding position in the second image.

8. The image capturing apparatus according to claim 1, wherein the combining means (3032) is configured to combine the first image with a portion of the second image where contrast is low.

9. An image processing apparatus that communicates via a network with an image capturing apparatus including infra-red light capturing means (302) and visible light capturing means (301), the image processing apparatus comprising:
reception means (204) configured to receive a first image obtained by the infra-red light capturing means (302) and a second image obtained by the visible light capturing means (301); and
output means (3033) for outputting, based on a result of detection of an object in the first image and a result of detection of an object in the second image, at least one of the first image, the second image, and a combined image obtained by combining the first and second images.

10. The image processing apparatus according to claim 9, further comprising estimation means (504) configured to estimate a type of a detected object from the first and second images using machine learning,
wherein based on the object estimated by the estimation means (504), the output means (3033) is configured to output at least one of the first image, the second image, and the combined image.

11. A control method for controlling an image capturing apparatus including infra-red light capturing means (302) and visible light capturing means (301), the control method comprising:
detecting an object from at least one of a first image obtained by the infra-red light capturing means (302) and a second image obtained by the visible light capturing means (301);
generating a combined image based on the first and second images; and
based on a result of the detection, selectively outputting one of the first image, the second image, and the combined image to a client apparatus (110) via a network (120).

12. The control method according to claim 11, further comprising detecting an object from the first image obtained by the infra-red light capturing means, and detecting an object from the second image obtained by the visible light capturing means,
wherein based on results of the detection, at least one of the first image, the second image, and the combined image is output.

13. The control method according to claim 12, wherein in a case where an object is not detected from the first image, the first image is output to the client apparatus.

14. The control method according to claim 12, wherein in a case where a predetermined characteristic is detected from the second image, the second image is output to the client apparatus.

15. The control method according to claim 12, wherein in a case where a predetermined characteristic is not detected from the second image, the combined image is output to the client apparatus.

16. A control method for controlling an image processing apparatus (110) that communicates via a network (120) with an image capturing apparatus (100) including an infra-red light capturing means (302) and a visible light capturing means (301), the control method comprising:
receiving a first image obtained by the infra-red light capturing means (302) and a second image obtained by the visible light capturing means (301); and
based on a result of detection of an object in the first image and a result of detection of an object in the second image, outputting at least one of the first image, the second image, and a combined image obtained by combining the first and second images.

17. A program that, when executed by an image capturing apparatus, causes the image capturing apparatus to perform a method according to claim 11.

18. A program that, when executed by an image processing apparatus, causes the image processing apparatus to perform a method according to claim 16.
